# EUROPÄISCHE PATENTSCHRIFT

(11) **EP 2 213 921 B1**
(45) Veröffentlichungstag und Bekanntmachung des Hinweises auf die Patenterteilung: **09.01.2013**
(21) Anmeldenummer: 10151535.1
(22) Anmeldetag: 25.01.2010
(51) Int. Cl.: F16K 31/06

(54) **Druckregelventil**
Pressure control valve
Soupape de réglage de pression

(30) Priorität: 02.02.2009 DE 102009007118
(43) Veröffentlichungstag der Anmeldung: 04.08.2010
(73) Patentinhaber: Pierburg GmbH, 41460 Neuss (DE)
(72) Erfinder: Buse, Werner, 41564, Kaarst (DE); Dohrmann, Rolf, 41564, Kaarst (DE); Schnelker, Franz-Josef, 41470, Neuss (DE)
(74) Vertreter: Patentanwälte ter Smitten Eberlein Rütten Partnerschaftsgesellschaft

(56) Entgegenhaltungen:
- DE-A1- 3 836 300
- DE-A1- 4 423 103
- GB-A- 1 324 198
- US-A- 5 300 368
- US-A1- 2001 048 091
- US-B1- 6 918 409

## Beschreibung

Die Erfindung betrifft ein Druckregelventil mit einem Gehäuse, dass eine auf einen Spulenträger gewickelte Spule, einen axial verschiebbaren Anker, einen Kern und eine Flussleiteinrichtung aufweist und einen Anschlussstutzen mit Druckmittelanschlussbohrungen besitzt, in dem ein Schieberorgan angeordnet ist und wobei mindestens eine Steuerfläche des Schieberorgans mit mindestens einem Öffnungsquerschnitt mindestens einer Druckmittelanschlussbohrung zusammenwirkt. Ein derartiges Druckregelventil ist bspw. aus der DE 44 23 103 C2 bekannt. Diese Druckschrift beschreibt ein proportional wirkendes Druckregelventil, bei dem Steuerflächen eines Schieberorgans derart mit Öffnungsquerschnitten von Druckmittelanschlussbohrungen zusammen wirken, das mittels eines Regeldruckes und der Magnetkraft ein gewünschter Druck an einem Druckmittelanschluss einstellbar ist. Das Schieberorgan ist hierbei in dem als Polkern ausgebildeten Gehäuseunterteil gelagert. In dem Gehäuseunterteil sind die Druckmittelanschlussbohrungen mit den zugehörigen Öffnungsquerschnitten vorgesehen. Sowohl die fluiddichte Lagerung des Schieberorgans im Gehäuseunterteil als auch die Herstellung der Öffnungsquerschnitte im Gehäuseunterteil sind mit einem hohen Fertigungsaufwand und dem damit verbundenen Kostenaufwand verbunden.

Auch die Dokumente US 2001/0048091 und US 6,918,409 offenbaren Druckregelventile.

Der Erfindung liegt daher die Aufgabe zugrunde, ein Druckregelventil zu verschaffen, das einfacher und kostengünstiger herzustellen ist.

Diese Aufgabe wird dadurch gelöst, dass im Anschlussstutzen mindestens eine Gleitlagerbuchse vorgesehen ist, in der das Schieberorgan gelagert ist und die den mindestens einen Öffnungsquerschnitt aufweist. Auf diese Weise wird ein Druckregelventil geschaffen, dass auf einfache Weise eine im Bereich der Steuerflächen fluiddichte Lagerung des Schieberorgans gewährleistet und bei dem die Öffnungsquerschnitte auf einfache und kostengünstige Weise herstellbar sind. Die Gleitlagerbuchse ist eine aus einem Blechstreifen gerollte Lagerbuchse. Hierbei ist sie vorteilhafterweise ein Mehrschicht-Gleitlager. Besonders kostengünstig kann der mindestens eine Öffnungsquerschnitt durch ein Stanz- oder Schneidverfahren herstellbar sein.

In einer ersten Ausführungsform, können der Anker und das Schiebeorgan einteilig ausgeführt sein. Auch ist es möglich, dass das Gehäuse im Wesentlichen zweiteilig ausgeführt ist, wobei ein Unterteil den Anschlussstutzen aufweist und in einem Oberteil des Gehäuses kraft- oder formschlüssig angeordnet ist. Um des Weiteren eine leichte Beweglichkeit des Ankers und des Schieberorgans zu gewährleisten, ist es möglich im Anker und im Schieberorgan mindestens eine Druckentlastungsbohrung vorzusehen. Dies hat auch zur Folge, dass der Elektromagnetantrieb eine wesentlich geringere Kraft bereitstellen muss, um den Anker zu bewegen und dementsprechend kostengünstig ausgeführt sein kann. Auch hat es sich als vorteilhaft erwiesen, dass der Kern einen Zapfen aus einem ummagnetisierbaren Werkstoff aufweist, der als Anschlagelement für den Anker und als Federsitz für eine Feder wirkt, die den Anker federnd gegenüber dem Kern abstützt. Dabei kann der Zapfen einstellbar im Kern angeordnet sind.

Um die Montage des Druckregelventils noch weiter zu vereinfachen, ist es sinnvoll, den Durchmesser der Druckmittelanschlussbohrung größer als den korrespondierenden Öffnungsquerschnitt in der Gleitlagerbuchse zu wählen. Auch ist es vorteilhaft, wenn die zum Kern gerichtete Oberkante des Unterteils als Referenzkante für die Gleitlagerbuchse dient. Auf diese Weise muss während der Montage lediglich die Oberkante der Gleitlagerbuchse mit der Referenzkante übereinstimmen, um zu gewährleisten, dass die Gleitlagerbuchse hinsichtlich ihrer Eindringtiefe in das Unterteil korrekt angeordnet ist. Um ein proportional zu einem Regeldruck regelbares Druckregelventil zu verschaffen, kann der Anschlussstutzen einen Regeldruckanschluss aufweisen, in dem ein Kolbenorgan angeordnet ist. Dieses Kolbenorgan ist vorteilhafterweise zweiteilig ausgeführt, um eine einfache Montage zu gewährleisten. Auch ist es denkbar, dass das Schieberorgan und das Kolbenorgan einteilig ausgeführt sind, um eine Ausführungsform zu verschaffen, die besonders einfach auf die unterschiedlichen Kundenerfordernisse abgestimmt werden kann. Nachfolgend wird die Erfindung anhand von bevorzugten Ausführungsformen unter Bezugnahme auf die anliegende Zeichnung näher erläutert. Hierin zeigt:

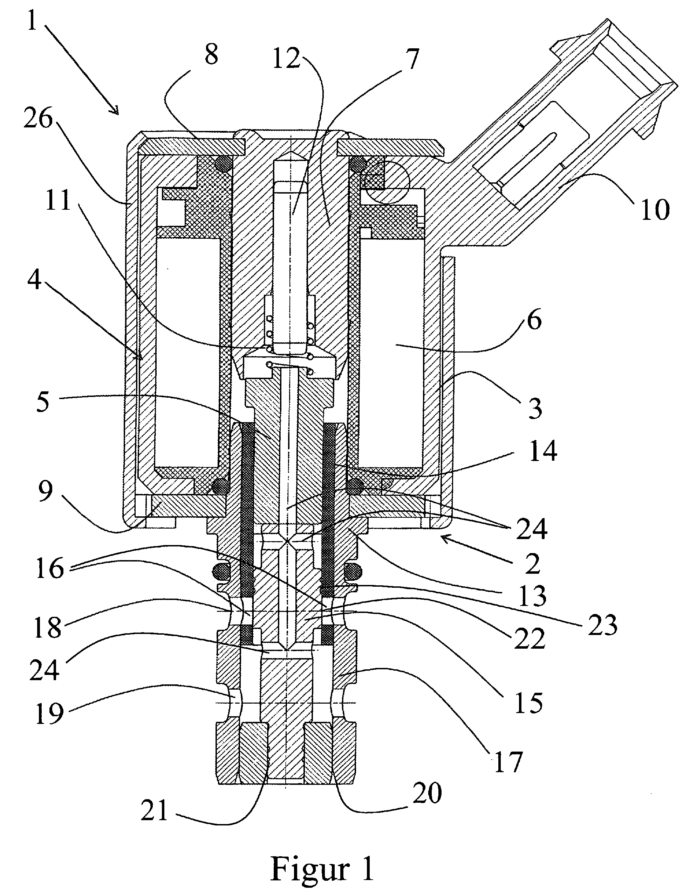

Figur 1 eine Schnittansicht eines Druckregelventils einer ersten Ausführungsform, und
Figur 2 eine Schnittansicht eines Druckregelventils einer zweiten Ausführungsform.

Eine erste Ausführungsform des erfindungsgemäßen Druckregelventils 1 weist ein Gehäuse 2 auf, das im Wesentlichen zweiteilig ausgeführt ist. Das Oberteil 3 weist eine elektromagnetische Antriebseinheit 4 auf, die auf einen axial verschiebbaren angeordneten Anker 5 einwirkt. Der elektromagnetische Antrieb 4 besteht im Wesentlichen aus einer Spule 6, einem Kern 7 und einer Flussleiteinrichtung, die aus einem Rückschlussblech 8, einem Joch 9 sowie einem Mantelblech 26 besteht. Das aus Kunststoff gefertigte Gehäuseoberteil 3 weist zudem noch einen Stecker 10 zur Ansteuerung des Druckregelventils 1 auf. Der Kern 7 ist im vorliegenden Fall im Oberteil 3 verklipst. Der Anker 5 ist hierbei durch eine Feder 11 gegenüber dem Kern 7 in einer Schließstellung vorgespannt. Die Feder 11 ist durch einen Zapfen 12 geführt, der im Montagezustand verstellbar im Kern 7 angeordnet ist und gleichzeitig als oberes Anschlagelement für den Anker 5 dient.

Im Gehäuseoberteil 3 ist ein Gehäuseunterteil 13 kraft- oder formschlüssig angeordnet. In diesem Gehäuseunterteil 13 ist eine Gleitlagerbuchse 14 vorgesehen, deren zum Kern gerichtete Oberkante mit der Oberkante des Unterteils 13 abschließt. Die Gleitlagerbuchse 14 dient zunächst als Lagerung für den Anker 5, der seinerseits auf ein Schieberorgan 15 einwirkt, das ebenfalls in der Gleitlagerbuchse 14 gelagert ist.

Die Gleitlagerbuchse 14 ist im vorliegenden Fall eine Mehrschicht-Gleitlager, die aus einem Blechstreifen gerollt ist. Im vorliegenden Fall wurde der Blechstreifen in dem Ausgangszustand durch ein Stanzverfahren mit zwei Öffnungen versehen, die im zusammen gerollten Zustand der Gleitlagerbuchse 14 die Öffnungsquerschnitte 16 bilden. Diese Öffnungsquerschnitte 16 wirken im vorliegenden Ausführungsbeispiel mit einer in einem Anschlussstutzen 17 angeordneten Druckmittelbohrung 18 zusammen. Um eine einfache Montage zu gewährleisten, kann der Durchmesser der Druckmittelanschlussbohrung 18 größer gewählt sein, als die Öffnungsquerschnitte 16. Eine zweite Druckmittelanschlussbohrung im Anschlussstutzen 17 ist mit dem Bezugszeichen 19 versehen. Der Anschlussstutzen 17 weist des Weiteren einen Regeldruckanschluss 20 auf, in dem ein Kolbenorgan 21 angeordnet ist. Das Schieberorgan 15 besitzt eine Steuerfläche 21, die in später dargestellter Weise mit den Öffnungsquerschnitten 16 zusammenwirkt. Des Weiteren weist das Schieberorgan eine Labyrinthdichtung 23 auf, die eine fluiddichte Führung des Schieberorgans 15 in der Gleitlagerbuchse 14 gewährleisten soll. Des Weiteren sind im Anker 5 und im Schieberorgan 15 auf bekannte Weise Druckentlastungsbohrungen 24 vorgesehen, die einen Druckausgleich innerhalb des Druckregelventils 1 gewährleisten. Auf diese Weise kann der elektromagnetische Antrieb 4 einfacher und kostengünstiger ausgeführt sein, da dieser lediglich die Federkraft der Feder 11 zu überwinden hat. Im vorliegenden Ausführungsbeispiel ist das Kolbenorgan 21 zusammen mit dem Schieberorgan 15 einteilig ausgeführt, wobei das Kolbenorgan 21 an sich aus zwei Teilen besteht. Hierdurch ist eine einfachere Montage gewährleistet.

Das dargestellte Druckregelventil 1 kann insbesondere als proportionales Druckregelventil für eine nicht dargestellte regelbare mechanische Ölpumpe eingesetzt werden. Dies kann beispielsweise eine an sich bekannte DrehschieberÖlpumpe sein, deren Förderdruck P1 durch einen an sich bekannten Verstellring eingestellt wird. Dieser Förderdruck P1 liegt im vorliegenden Ausführungsbeispiel am Regeldruckanschluss 20 an. Der Druckmittelanschlussstutzen 18 stellt den Steuerdruck bereit, durch den eine Verstellung der Drehschieber/Ölpumpe statt findet. Über den Druckmittelanschluss 19 kann das Öl in Richtung Ölwanne abfließen.

Der Förderdruck p1 der Ölpumpe wirkt einerseits direkt auf Anschluss 20 und Kolbenorgan 21, andererseits über interne Verschaltung mit einer Festdüse als Drosselorgan innerhalb der Ölpumpe als Regeldruck p2 auf Anschluss 18 des Druckregelventils. Wenn die Steuerbohrung 16 bei ansteigender Magnetkraft von dem Steuerschieber 15 freigegeben wird, verringert sich der Regeldruck p2 an Anschluss 18 durch Abströmung von Öl über die Steuerbohrungen 16 zur Ölwanne an Anschluss 19. Der verringerte Regeldruck bewirkt durch Verstellorgane innerhalb der Ölpumpe eine Verringerung des Förderdrucks p1 an Anschluss 20 des Druckwandlers. Somit wirkt als Gegenkraft zur Kraft der Feder 11 eine geringere hydraulische Druckkraft auf das Kolbenorgan 21. Dadurch wird eine geringfügige Bewegung des Steuerkolbens 15 in Richtung Anschluss 20 bewirkt, die Öffnung der Steuerbohrungen 16 und der Abfluss des Steuerdrucks in Richtung Anschluss 19 verringert und ein Kräftegleichgewicht zwischen Federkraft 11, Magnetkraft und hydraulischer Druckkraft an Kolbenorgan 21 hergestellt. In Summe kann über eine von Magnetkraft bewirkte partielle Öffnung der Öffnungsquerschnitte 16 und den damit einstellbaren Regeldruck p2 der Öldruck der Ölpumpe über deren hydraulische Verstellorgane eingestellt werden. Der an Anschluss 20 wirkende Förderdruck p1 dient als rückführende Kraft auf den Steuerkolben 15 für den elektromagnetisch beeinflussten oder eingestellten Förderdruck der Ölpumpe.

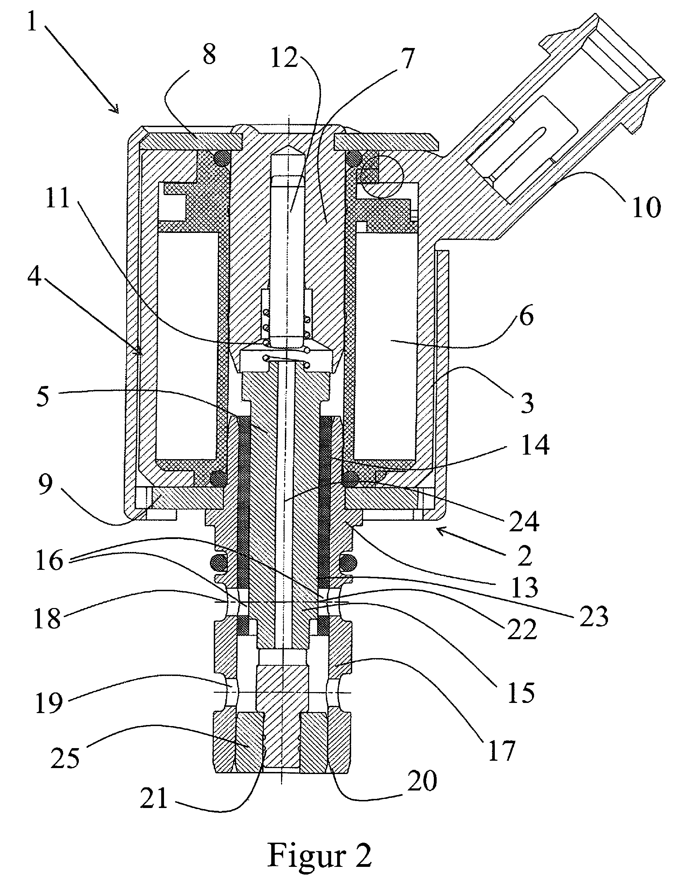

Das in Figur 2 dargestellte zweite Ausführungsbeispiel eines Druckregelventils 1 unterscheidet sich lediglich dadurch, dass hierbei der Anker 5 und das Schieberorgan 15 einteilig ausgeführt sind. Das zweiteilige Kolbenorgan 21 wirkt hierbei auf die Unterseite des Schieberorgans 15. Neben einer einfacheren Montage kann die zweiteilige Ausführungsform des Kolbenorgans 21 jedoch auch noch weitere Vorteile besitzen. So ist auf diese Weise eine bessere axiale Verschiebbarkeit gewährleistet und es ist auch noch möglich, durch ein entsprechendes Gewinde einen äußeren Ring 25 als Einstellmittel für die Position des Ankers 5 im Bezug auf den Kern 7 zu nutzen.

## Patentansprüche

1. Druckregelvenbil (1) mit einem Gehäuse (2), das eine auf einen Spulenträger gewinkelte Spule (6), einen axial verschiebbaren Anker (5), einen Kern (7) und eine Flussleiteinrichtung (8, 9, 26) aufweist und einen Anschlussstutzen (17) mit Druckmittelanschlussbohrungen (18, 19) besitzt, in dem ein Schieberorgan (15) angeordnet ist und wobei mindestens eine Steuerfläche (23) des Schleberorgans (15) mit mindestens einem Öffnungsquerschnitt (16) mindestens einer Druckmittelanschlussbohrung (18) zusammenwirkt, wobei im Anschlussstutzen (17) mindestens eine Gleitlagerbuchse (14) vorgesehen ist, in der das Schieberorgan (15) gelagert ist und die den mindestens einen Öffnungsquerschnitt (16) aufweist, **dadurch gekennzeichnet, dass** die Gleitlagerbuchse (14) eine aus einem Blechstreifen gerollte Lagerbuchse ist.

2. Druckregelventil nach Anspruch 1, **dadurch gekennzeichnet, dass** die Gleitlagerbuchse (14) eine Mehrschicht-Gleitlager ist.

3. Druckregelventil nach Anspruch 1 oder 2, **dadurch gekennzeichnet, dass** der mindestens eine Öffnungsquerschnitt (16) durch ein Stanz- oder Schneidverfahren herstellbar ist.

4. Druckregelventil nach einem der vorhergehenden Ansprüche, **dadurch gekennzeichnet, dass** der Anker (5) und das Schieberorgan (15) einteilig ausgeführt sind.

5. Druckregelventil nach einem der vorhergehenden Ansprüche, **dadurch gekennzeichnet, dass** das Gehäuse (2) im wesentlichen zweiteilig ausgeführt ist, wobei ein Unterteil (13) den Anschlussstutzen (15) aufweist und in einem Oberteil (3) des Gehäuses (2) kraft- oder formschlüssig angeordnet ist.

6. Druckregelventil nach einem der vorhergehenden Ansprüche, **dadurch gekennzeichnet, dass** im Anker (5) und im Schieberorgan (15) mindestens eine Druckentlastungsbohrung (24) vorgesehen ist.

7. Druckregelventil nach einem der vorhergehenden Ansprüche, **dadurch gekennzeichnet, dass** der Kern (7) einen Zapfen (12) aus einem unmagnetisierbaren Werkstoff aufweist, der als Anschlagelement für den Anker (5) und als Federsitz für eine Feder (11) wirkt, die den Anker (5) federnd gegenüber dem Kern (7) abstützt.

8. Druckregelventil nach einem der vorhergehenden Ansprüche, **dadurch gekennzeichnet, dass** der Zapfen (12) einstellbar im Kern (7) angeordnet ist.

9. Druckregelventil nach einem der vorhergehenden Ansprüche, **dadurch gekennzeichnet, dass** der Durchmesser der Druckmittelanschlussbohrung (18) größer als der korrespondierende Öffnungsquerschnitt (16) in der Gleitlagerbuchse (14) gewählt ist.

10. Druckregelventil nach einem der vorhergehenden Ansprüche, **dadurch gekennzeichnet, dass** die zum Kern (7) gerichtete Oberkante des Unterteils (13) als Referenzkante für die Gleitlagerbuchse (14) dient.

11. Druckregelventil nach einem der vorhergehenden Ansprüche, **dadurch gekennzeichnet, dass** der Anschlussstutzen (17) einen Regeldruckanschluss (20) aufweist, in dem ein Kolbenorgan angeordnet ist.

12. Druckregelventil nach einem der vorhergehenden Ansprüche, **dadurch gekennzeichnet, dass** das Kolbenorgan (21) zweiteilig ausgeführt ist.

13. Druckregelventil nach einem der vorhergehenden Ansprüche, **dadurch gekennzeichnet, dass** das Schieberorgan (15) und das Kolbenorgan (21) einteilig ausgeführt sind.

## Claims

1. A pressure control valve (1) with a housing (2) comprising a coil (8) wound upon a coil carrier, an axially displaceable armature (5), a core (7) and a flux conducting means (8, 9, 26), and having a connector piece (17) with pressure medium connection bores (18, 19), in which a slide element (15) is arranged, and wherein at least one control surface (23) of the slide element (15) cooperates with at least one opening cross section (16) of at least one pressure medium connection bore (18), wherein at least one slide bearing bushing (14) is provided in the connector piece (17), in which bushing the slide element (15) is supported and which has said at least one opening cross section (16), **characterized in that** the slide bearing bushing (14) is a bearing bushing rolled from a sheet metal strip.

2. The pressure control valve of claim 1, **characterized in that** the slide bearing bushing (14) is a multi-layer slide bearing.

3. The pressure control valve of claim 1 or 2, **characterized in that** the at least one opening cross section (16) can be made by means of a punching or cutting process.

4. The pressure control valve of one of the preceding claims, **characterized in that** the armature (5) and the slide element (15) are formed integrally.

5. The pressure control valve of one of the preceding claims, **characterized in that** the housing (2) is substantially of a two piece design, wherein a lower part (13) comprises the connector piece (15) and is arranged in a force-fitting or a form-fitting manner in an upper part (3) of the housing (2).

6. The pressure control valve of one of the preceding claims, **characterized in that** at least one pressure relief bore (24) is provided in the armature (5) and in the slide element (15).

7. The pressure control valve of one of the preceding claims, **characterized in that** the core (7) comprises a pin (12) of a non-magnetizable material, which serves as a stop element for the armature (5) and as a spring seat for a spring (11) that resiliently supports the armature (5) with respect to the core (7).

8. The pressure control valve of one of the preceding claims, **characterized in that** the pin (12) is arranged in the core (7) in an adjustable manner.

9. The pressure control valve of one of the preceding claims, **characterized in that** the diameter of the pressure medium connection bore (18) is selected to be larger than the corresponding opening cross section (16) in the slide bearing bushing (14).

10. The pressure control valve of one of the preceding claims, **characterized in that** the upper edge of the lower part (13) directed towards the core (7) serves as a reference edge for the slide bearing bushing (14).

11. The pressure control valve of one of the preceding claims, **characterized in that** the connector piece (17) comprises a control pressure connector (20) in which a piston element is arranged.

12. The pressure control valve of one of the preceding claims, **characterized in that** the piston element (21) is of a two-piece design.

13. The pressure control valve of one of the preceding claims, **characterized in that** the slide element (15) and the piston element (21) are formed integrally.

## Revendications

1. Soupape de réglage de pression (1) avec un boitier (2) comprenant une bobine (6) enroulée sur une porte-bobine, un induit (5) axialement déplaçable, un noyau (7) et un moyen de guidage de flux (8, 9, 26), et ayant un raccord (17) avec des alésages (18, 19) pour le raccordement d'un fluide de pression, dans lequel est disposé un élément glissière (15), et au moins une surface de commande (23) dudit élément glissière (15) coopère avec au moins une section d'ouverture (16) d'au moins un alésage (18, 19) pour le raccordement d'un fluide de pression, au moins une bague de glissement (14) étant disposée dans ledit raccord (17), ledit élément glissière (15) étant supporté dans ladite bague, et ladite bague comprenant ladite au moins une section d'ouverture (16), **caractérisée en ce que** ladite une bague de glissement (14) est un coussinet roulé à partir d'une bande de tôle métallique.

2. Soupape de réglage de pression selon la revendication 1, **caractérisée en ce que** ladite bague de glissement (14) est un palier lisse multicouche.

3. Soupape de réglage de pression selon les revendications 1 ou 2, **caractérisée en ce que** ladite au moins une section d'ouverture (16) peut être fabriquée par un procédé d'estampage ou de coupe.

4. Soupape de réglage de pression selon l'une quelconque des revendications précédentes, **caractérisée en ce que** l'induit (5) et l'élément glissière (15) sont formés d'un seul tenant.

5. Soupape de réglage de pression selon l'une quelconque des revendications précédentes, **caractérisée en ce que** le boitier (2) est sensiblement réalisé en deux parties, une partie inférieure (13) comprenant ledit raccord (17)
et étant disposée par liaison de force ou de forme dans une partie supérieure (3) dudit boitier (2).

6. Soupape de réglage de pression selon l'une quelconque des revendications précédentes, **caractérisée en ce qu'**au moins un alésage de décharge de compression (24) est prévu dans l'induit (5) et dans l'élément glissière (15).

7. Soupape de réglage de pression selon l'une quelconque des revendications précédentes, **caractérisée en ce que** ledit noyau (7) comprend un tenon (12) d'une matière non magnétisable servant comme élément de butée pour ledit induit (5) et comme siège de ressort pour un ressort (11) qui appuie ledit induit (5) de manière élastique par rapport au noyau (7).

8. Soupape de réglage de pression selon l'une quelconque des revendications précédentes, **caractérisée en ce que** ledit tenon (12) est disposé dans ledit noyau (7) de sorte qu'il soit ajustable.

9. Soupape de réglage de pression selon l'une quelconque des revendications précédentes, **caractérisée en ce que** le diamètre dudit alésage (18) pour le raccordement d'un fluide de pression est choisi plus grand que celui de la section d'ouverture (16) correspondante dans la bague de glissement (14).

10. Soupape de réglage de pression selon l'une quelconque des revendications précédentes, **caractérisée en ce que** l'arête supérieure de la partie inférieure (13), orientée vers ledit noyau (7), sert comme arête de référence pour la bague de glissement (14).

11. Soupape de réglage de pression selon l'une quelconque des revendications précédentes, **caractérisée en ce que** ledit raccord (17) comprend un port de pression de contrôle (20) dans lequel est disposé un élément de piston.

12. Soupape de réglage de pression selon l'une quelconque des revendications précédentes, **caractérisée en ce que** ledit élément de piston (21) est réalisé en deux parties.

13. Soupape de réglage de pression selon l'une quelconque des revendications précédentes, **caractérisée en ce que** ledit élément glissière (15) et ledit élément de piston (21) sont formés d'un seul tenant.
